Europäisches Patentamt

European Patent Office

Office européen des brevets

(11) Publication number: **0 178 802**
**B1**

# EUROPEAN PATENT SPECIFICATION

(45) Date of publication of patent specification: **13.07.88**

(21) Application number: **85306685.0**

(22) Date of filing: **19.09.85**

(51) Int. Cl.⁴: **B 09 B 5/00,** B 30 B 9/32,
G 21 F 9/36

(54) Compression and volume reduction treatment apparatus.

(30) Priority: **02.10.84 JP 206565/84**
**20.06.85 JP 133033/85**
**20.06.85 JP 133034/85**

(43) Date of publication of application:
**23.04.86 Bulletin 86/17**

(45) Publication of the grant of the patent:
**13.07.88 Bulletin 88/28**

(84) Designated Contracting States:
**DE FR GB**

(56) References cited:
**AU-B- 72 825**
**DE-A-1 577 271**
**DE-B-2 243 136**
**DE-C- 360 140**
**GB-A-1 230 014**

(73) Proprietor: **NGK INSULATORS, LTD.**
**2-56, Suda-cho, Mizuho-ku**
**Nagoya-shi, Aichi 467 (JP)**

(72) Inventor: **Yamamoto, Kojuro**
**4-21 Konomiya 2-chome**
**Inazawa City Aichi Pref. (JP)**
Inventor: **Torita, Katsutoshi**
**120 Yuraku-cho 6-chome**
**Handa City Aichi Pref. (JP)**

(74) Representative: **Senior, Alan Murray et al**
**J.A. KEMP & CO 14 South Square Gray's Inn**
**London WC1R 5EU (GB)**

Courier Press, Leamington Spa, England.

## Description

This invention relates to an apparatus for compressing vessels filled with miscellaneous combustible and incombustible solid wastes according to the preamble of claim 1, so as to reduce their volumes, and more particularly to an apparatus for pressing various solid wastes packed in cylindrical vessels, for example, steel drums so as to reduce their volumes in three dimensional directions by uniaxial compression to form reduced volume compacted blocks.

In general, miscellaneous combustible and incombustible solid wastes having various shapes and properties are treated by incineration or compressed to form compacted blocks according to their properties and thereafter used for reclamation or utilized again if useful substances are included. Among these solid wastes, however, there are some kinds of wastes unavoidably stored in places or plants where they are produced because it is impossible to throw them away which are wastes contaminated by radioactive materials derived from nuclear power installations such as nuclear power stations, nuclear power research installations, nuclear fuel treating installations, nuclear power reprocessing factories, radioisotope treating installations and the like (, which will be referred to hereinafter as "radioactive waste"), and wastes contaminated by poisonous or toxic substances derived from poisonous material producing or treating processes (which will be referred to hereinafter as "poisonous waste"). In this case, they are usually packed and stored in cylindrical vessels such as steel drums in order to prevent the radioactive or poisonous substances from spattering from the waste and to prevent spread of contamination. As the stored amounts progressively increase, combustible wastes have been burned to reduce their volumes in certain installations, and incombustible wastes have been compressed to reduce their volume in certain plants, or if not at least to start studying such processes for the purpose of saving spaces for the storage.

Such a compression treatment for wastes is the simplest process for reducing volumes of the waste and has an advantage in that no secondary waste occurs in this process. In the compression treatment presently carried out in nuclear power stations and the like, after a cover of a steel drum is opened and wastes are charged into the steel drum, the wastes are compressed to reduce their volume by a press ram having a diameter slightly smaller than an inner diameter of the steel drum. Such a method is disclosed in AU—B—72 825/81. With this processing, there is a risk of radioactive materials spattering to spread the contamination, and particularly, for wastes having high restoring ability, the compressed wastes are apt to increase again their reduced volumes, so that the expected reduction in volume cannot be achieved.

Moreover, it has been proposed to compress wastes together with steel drums filled therewith to reduce their volumes. In this case, the steel drum filled with wastes is compressed in a cylindrical sleeve in a uniaxial direction or in three dimensional directions. In the uniaxial compression, outer diameters of compressed wastes and drums (referred to hereinafter "compressed blocks") are substantially equal to or larger than inner diameters of the original steel drums, so that a new vessel such as a steel drum having a larger inner diameter is needed for storing the compressed blocks as a disadvantage in the uniaxial compression. For example, it is required to prepare two kinds of steel drums having capacities of 180 and 200 l, respectively. In the three dimensional compression, on the other hand, although it does not have this disadvantage, an apparatus for compression is complicated and bulky to increase the cost of equipment owing to the compression in the multiple directions.

It is a primary object of the invention to provide a compression and volume reduction treatment apparatus for solid wastes, which alleviate the disadvantages of the prior art and which is capable of compressing the solid wastes together with a cylindrical vessel accommodating therein the solid wastes in three dimensional directions by a uniaxial compression to form a compressed block having a size able to be stored in a cylindrical vessel having the same size as that of the first mentioned cylindrical vessel.

According to the present invention, there is provided a compression and volume reduction treatment apparatus for solid wastes including a compression sleeve for receiving therein a cylindrical vessel filled with the solid wastes and a pess ram arranged above said compression sleeve and movable upward and downward for compressing at high pressure the cylindrical vessel in the compression sleeve, characterised in that the compression sleeve comprises an upper straight portion with larger diameter than the cylindrical vessel and having a straight cylindrical inner surface, in which the cylindrical vessel is a close fit, a lower straight portion having a smaller diameter than the cylindrical vessel and having a straight cylindrical inner surface whose inner diameter is smaller than that of said upper straight larger diameter portion, and an intermediate tapered portion whose inner surface is tapered downward to connect said straight cylindrical inner surfaces of said upper and lower portions, thereby compressing said cylindrical vessel and reducing its volume in three dimensional directions by compressing said vessel radially inwardly at the tapered inner surface of said intermediate tapered portion and compressing axially at said inner surface of said lower straight smaller diameter portion when the cylindrical vessel in said upper straight larger diameter portion is urged by said press ram in a uniaxial direction.

The compression sleeve is preferably provided in its inner surfaces with a number of longitudinal grooves in its axial direction adapted to engage a number of ridges formed on outer circumferential surface of the press arm. It is particularly preferable to form the longitudinal grooves so that their bottoms are rectilinearly continuous from an upper end to a lower end of the compression sleeve.

It is also preferable that the press ram is made as a duplicate press ram comprising an outer press ram engageable in the lower straight smaller diameter portion of the compression sleeve and a pushing-in press ram provided in the outer press ram so as to be movable relatively to and in moving directions of the outer press ram.

With this preferred embodiment, after a cylindrical vessel in the compression sleeve is compressed into the intermediate tapered portion by the duplicate press ram in cooperation of the outer press ram with the pushing-in press ram, the vessel is compressed into the lower straight small diameter portion of the compression sleeve by the pushing-in press ram movable in and relatively to the outer press ram and further compressed in the lower straight small diameter portion in three dimensional directions to reduce their volume in cooperation of the outer press ram with the pushing-in press ram. In this manner, compressed blocks subjected to compression and volume reduction are smaller in external size or outer diameter than that of the first mentioned cylindrical vessel, so that a plurality of compressed blocks can be stored in a cylindrical vessel, for example, a steel drum having the same size as the first mentioned cylindrical vessel. Waste storage vessels can be therefore rationally handled.

It is another object of the invention to provide a compression and volume reduction treatment apparatus for solid wastes which is able to compress a cylindrical vessel filled with solid wastes to reduce its volume only by compression in one direction, thereby obtaining effective handling of waste storage vessels and discarded high efficiency particle air filters (HEPA filters).

It is a further object of the invention to provide a compression and volume reduction treatment apparatus for solid wastes, whose overall height is made so low as to be installed in a narrow room, particularly low room.

In order to accomplish these objects, according to the invention the lower straight small diameter portion is made by a different part detachable from the upper straight larger diameter portion and the intermediate tapered portion integral therewith, and the apparatus comprises a pre-compression device having a pushing press ram for compressing the cylindrical vessel radially inwardly at the intermediate tapered portion into the lower straight small diameter portion and a main compression device in which the radially inwardly compressed cylindrical vessel is compressed axially in the lower straight small diameter portion transferred from the pre-compression device.

Moreover the pre-compression device is provided on a base common to the main compression device, and a slide base is provided on the base enabling the lower straight small diameter portion to move between the pre-compression and main compression devices.

With this arrangement, prior to the compression and volume reduction by the main compression device a cylindrical vessel or discarded high efficiency particle air filter having an outer diameter larger than the inner diameter of the lower straight smaller diameter portion is compressed into the lower straight smaller diameter portion with the aid of the pre-compression press ram and the upper straight larger diameter portion and the intermediate tapered portion integral therewith in the pre-compression device, and thereafter the pre-compressed vessel is further compressed to reduce the volume. In this manner, the compressed block is smaller in external size or outer diameter than the original cylindrical vessel. Moreover, as the pre-compression device and the main compression device take partial charge of the compression in the compression sleeve, respectively, the overall height of the apparatus is lower than that of the prior art.

Furthermore, the compressed blocks may be quadrilateral or hexagonal in section which can improve the storage efficiency for the compressed blocks.

In order that the invention may be more readily understood, the following description is given by way of example only, with reference to the accompanying drawings in which:—

Figure 1 is a partially cut away front elevation of a first embodiment of the invention;

Figure 2 is a sectional view taken along a line II—II in Fig. 1;

Figure 3 is a partially sectional front elevation of another embodiment of the invention;

Figures 4a-4e illustrate actual steps for carrying out the compression and volume reduction treatment with the apparatus shown in Figure 3;

Figure 5 is a front elevation illustrating a further embodiment of the apparatus according to the invention; and

Figures 6 and 7 are cross-sectional views illustrating modifications of the compression sleeve used in the present invention, respectively.

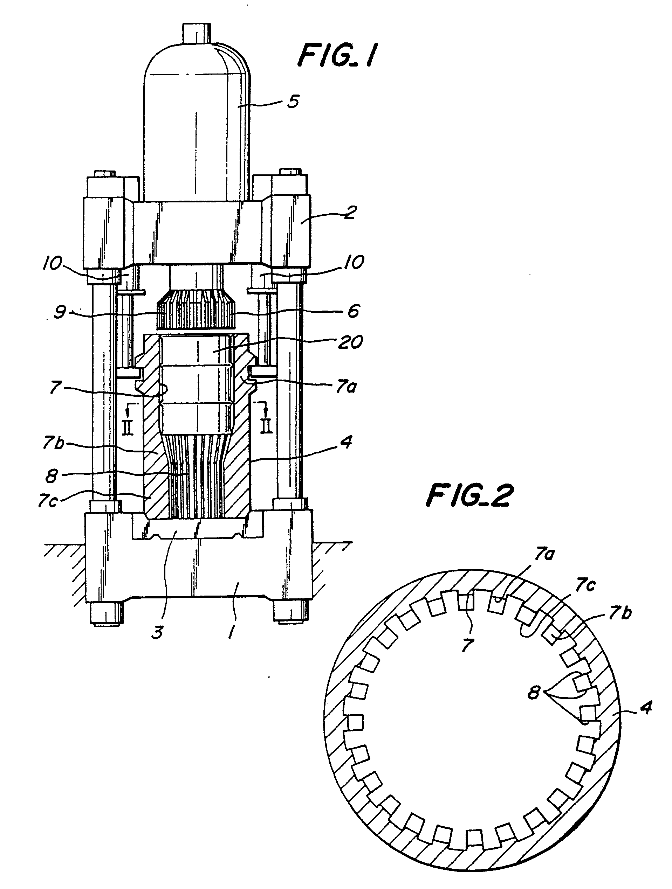

Referring to Figure 1 illustrating one embodiment of the apparatus according to the invention, it comprises a base 1, a frame 2 standing upright thereon, a slide base 3 centrally arranged slidably on an upper surface of the base 1, a compression sleeve 4 provided on the slide base 3, a hydraulic cylinder 5 having the maximum compressive force, for example, about 9950 KN (1,000 tons) provided on the frame 2, and a press ram 6 adapted to be driven by the hydraulic cylinder 5. The compression sleeve 4 for receiving therein a cylindrical vessel 20 as a steel drum filled with solid wastes has an inner circumferential surface 7 and consists of an upper straight large diameter portion 7a having a straight cylindrical inner surface slightly larger than the cylindrical vessel 20, a lower straight small diameter portion 7c having a straight cylindrical inner surface of which diameter is smaller than that of the cylindrical vessel 20, and an intermediate tapered portion 7b whose inner surface is tapered downward to connect the inner surfaces of the large and small diameter portions 7a and 7c as shown in Fig. 2. The compression sleeve is further formed in its inner circumferential surface 7 with a number of longitudinal grooves 8 rectilinearly continuous from its upper to lower end. These grooves 8 engage a number of ridges 9 formed on an outer circumferential surface of the press ram 6 to prevent any spaces from being formed between the press ram 6 and the inner circumferential surface 7 of the compression sleeve 4 in both the cases of the lower end of the press ram 6 being positioned in the straight large diameter portion 7a and in the straight small diameter portion 7c. When the lower end of the press ram 6 is in the straight large diameter portion 7a, the ridges 9 engage the longitudinal grooves 8 so as to extend edges of the ridges 9 slightly into the grooves 8. When the lower end of the press ram 6 arrives through the intermediate tapered portion 7b at the lower straight small diameter portion 7c, the ridges 9 engage into the longitudinal grooves 8 sufficiently deeply. In this manner, the ridges 9 and the longitudinal grooves 8 always engage with each other to prevent clearances between the press ram 6 and the compression sleeve 4. For this purpose, therefore, bottoms of the longitudinal grooves 8 of the compression sleeve 4 should be parallel with the vertical axis of the compression sleeve 4 and extending from the straight large diameter portion 7a to the straight small diameter portion 7c. Moreover, a diameter of bottoms of grooves formed between the ridges 9 of the press ram 6 should be small enough to be accommodated in the straight smaller diameter portion 7c of the compression sleeve 4. Although the longitudinal grooves 8 preferably extend from the upper end to the lower end of the inner circumferential surface 7 of the compression sleeve 4, the grooves in the straight larger diameter portion 7a may be dispensed with. Furthermore, it is preferable for the compression sleeve 4 to be liftable when compressed waste block is removed. In this embodiment, lifting means 10 having hydraulic cylinders support the compression sleeve 4 so as to be freely raised and lowered.

With this arrangement, under a condition where the press ram 6 provided on the frame 2 is raised, the cylindrical vessel 20 filled with solid wastes is located in the straight larger diameter portion 7a of the compression sleeve 4. The compression sleeve 4 accommodating therein the cylindrical vessel 20 is brought into a position directly below the press ram 6 by moving the slide base 3 carrying thereon the compression sleeve 4. After the ridges 9 on the outer circumferential surface of the press ram 6 are brought into engagement with the longitudinal grooves 8 in the inner circumferential surface 7 of the compression sleeve 4, the press ram 6 is lowered so as to urge the cylindrical vessel 20 with the solid wastes therein downward toward the intermediate tapered portion 7b of the compression sleeve 4. The cylindrical vessel with the solid wastes is subjected to compressive forces radially inwardly toward a centre axis of the cylindrical vessel to reduce its diameter during passing through the intermediate tapered portion. Thereafter, the cylindrical vessel with the solid wastes arrive in the lower straight smaller diameter portion 7c of the compression sleeve 4, where they are finally pressed with high pressure by means of the press ram 6 to reduce their height to a fraction of their original height. In other words, the cylindrical vessel filled with solid wastes is compressed to reduce its volume in three dimensional directions by vertically compressing it only in a uniaxial or single axial direction. Moreover, because of the number of longitudinal grooves 8 formed in the inner circumferential surface 7 of the compression sleeve 4 engaging the number of ridges 9 formed on the outer circumferential surface of the press ram 6 to prevent any clearances between them, the cylindrical vessel 20 is compressed so as to reduce its volume into the form of a disc without outward extending of the cylindrical vessel 20 and without bursting out and scattering of the solid wastes.

Thereafter, while the press ram 6 is maintained in its compressing position, the compression sleeve 4 is lifted by means of the lifting means 10 to remove the compressed block downward relatively to the compression sleeve 4. The compressed block is moved out of the apparatus with the aid of the slide base 3. As the compressed block has been compressed vertically to a fraction of its original height of the cylindrical vessel and radially inwardly by 10—20%, so that several blocks thus compressed can be accommodated in a cylindrical vessel substantially the same in dimension as that of the original cylindrical vessel 20.

As can be seen from the above explanation, according to the invention solid wastes filled in a cylindrical vessel as a steel drum are compressed radially and axially or vertically in three dimensional directions by compressing in a uniaxial direction so as to reduce the volume of the solid wastes, thereby enabling blocks thus compressed to be accommodated in a vessel substantially the same in dimension as that of the original vessel. As the result, solid wastes can be treated without preparing cylindrical vessels of different sizes. Moreover, the press ram of the apparatus according to the invention requires simply to move in operation only in a uniaxial direction, so that the apparatus suffices to have the simplified compressing mechanism so as to reduce the cost of equipment. Moreover, the longitudinal grooves formed in the inner circumferential surface of the compression sleeve engage the ridges on the outer circumferential surface of the press ram so as to prevent outward extending of compressed block and bursting out and scattering of solid wastes to ensure the reliable treatment for compressing and reducing in volume the solid wastes.

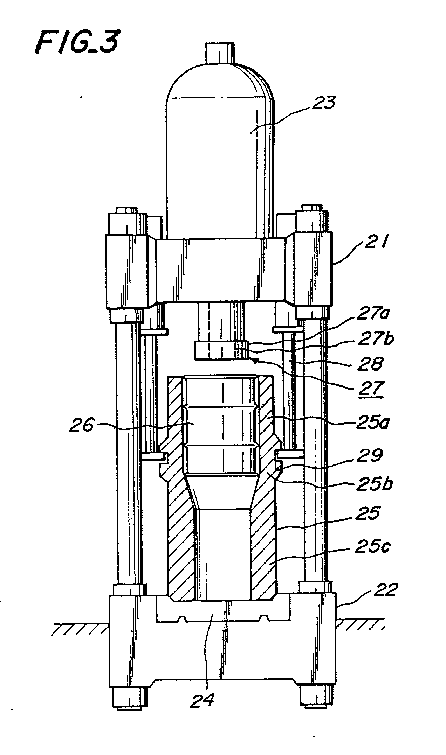

Fig. 3 illustrates another embodiment of the apparatus according to the invention. This apparatus comprises a base 22, a frame 21 rigidly mounted on the base 22, and a hydraulic cylinder 23 having the maximum compressive force, for example about 9950 KN (1,000 tons) provided on the frame 21. A slide base 24 is centrally provided slidably on an upper surface of the base 22. On the slide base 24 is located a compression sleeve 25 which preferably consists of an upper straight large diameter portion 25a preferably in the form of a straight cylinder, an intermediate tapered portion 25b and a lower straight small diameter portion 25c in the form of a straight cylinder having a diameter smaller than a cylindrical vessel for accommodating solid wastes. Onto a rod of the hydraulic cylinder 23 is mounted a duplicate press ram 27 consisting of an outer press ram 27a engageable in the lower straight smaller diameter portion of the compression sleeve 25 and a pushing-in press ram 27b provided in the outer press ram 27a so as to be movable relatively to and in moving directions of the outer press ram 27a. The outer press ram 27a is formed to have a dimension able to engage in the lower straight smaller diameter portion 25c. The pushing-in press ram 27b is used to force the cylindrical vessel 26 into the lower straight smaller diameter portion 25c of the compression sleeve 25 without jamming the cylindrical vessel 26 between the compression sleeve 25 and the outer press ram 27a when the cylindrical vessel 26 passes through the intermediate tapered portion 25b by the outer press ram 27a. The compression sleeve 25 is circumferentially formed with a groove 29 within which lifting means 28 engage for lifting the compression sleeve 25.

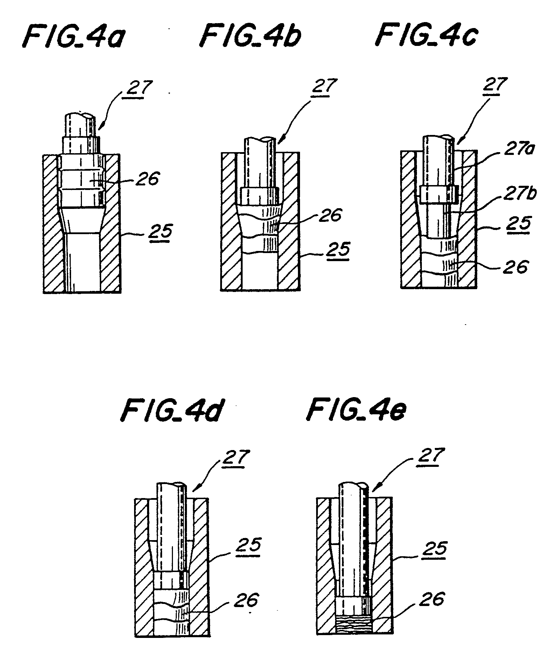

Figs. 4a—4a illustrates successive steps for compressing solid wastes to reduce their volume with the compression and volume reduction treatment apparatus according to the invention shown in Fig. 3. A cylindrical vessel 26 filled with solid wastes is first charged or loaded in the compression sleeve 25 which has been moved from its normal position directly below the duplicate press ram 27 by sliding the slide base 24 out of the apparatus. The compression sleeve 25 together with the cylindrical vessel 26 therein is returned to the normal position again with the aid of the slide base 24 (Fig. 4a). The cylindrical vessel 26 filled with the solid wastes is then forced into the lower straight smaller diameter portion 25c of the compression sleeve 25 by the cooperation of the outer press ram 27a and the pushing-in press ram 27b as shown in Fig. 4b. In this case, the cylindrical vessel is not pushed too deep into the lower straight small diameter portion 25c, inasmuch as there is a risk of the cylindrical vessel 26 being jammed between the compression sleeve 25 and the outer press ram 27a when the cylindrical vessel 26 is pushed into the lower straight small diameter portion 25c to an excessive extent. Thereafter, the pushing-in press ram 27b is actuated to force the cylindrical vessel 26 into the lower straight smaller diameter portion 25c of the compression sleeve 25 as shown in Fig. 4c. The outer press ram 27a is then lowered to receive therein the pushing-in press ram 27b as shown in Fig. 4d. Then, the outer press ram 27a cooperates with the pushing-in press ram 27b so as to compress the cylindrical vessel to obtain a compressed block as shown in Fig. 4e.

Thereafter, the lifting means 28 is operated to raise the sleeve 25, under which condition the compressed block is transferred out of the apparatus by sliding the slide base 24. A plurality of thus compressed blocks are stored in a steel drum having the same size as that of the original cylindrical vessel 26.

Although the pushing-in press ram 27b has been used in above embodiment, this is only by way of example, and a detachable spacer may be used instead of the pushing-in press ram 27b.

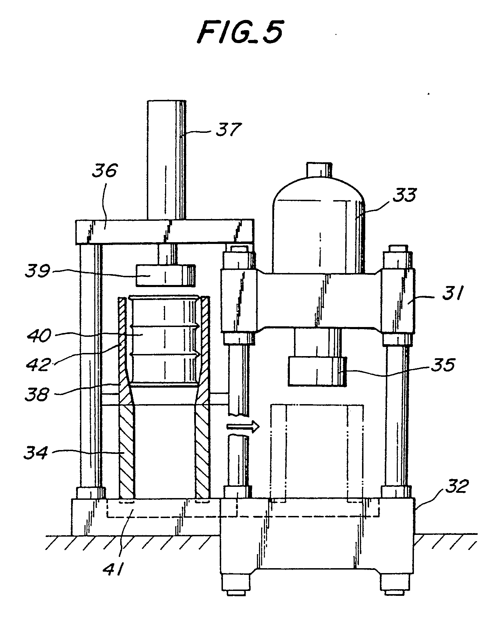

Fig. 5 illustrates a further embodiment of the apparatus according to the invention. A frame 31 is rigidly mounted on a base 32 for constituting a main compression device. A hydraulic cylinder 33 having the maximum compressive force, for example, about 9950 KN (1,000 tons) is located on the frame 31. Onto a rod of the hydraulic cylinder 33 is mounted a main press ram 35 having an outer diameter engageable with a lower straight smaller diameter portion 34 of a compression sleeve. In order to construct a pre-compression device, on an extension of the base 32 is provided a pushing press frame 36 onto which are fixed a pushing hydraulic cylinder 37 and an upper straight larger diameter portion 42 and an intermediate tapered portion 38 integral therewith as a part of a compression sleeve. Onto a rod of the hydraulic cylinder 37 is mounted a pushing press ram or pre-compression press ram 39. The lower straight smaller diameter portion 34 has an inner diameter smaller than an outer diameter of a cylindrical vessel 40 to be filled with solid wastes, while the upper straight larger diameter portion 42 has an inner diameter enabling the cylindrical vessel 40 to be received. The intermediate tapered portion 38 has an inner surface tapered downward whose an inner diameter at the lowermost end is equal to the inner diameter of the lower straight small diameter portion. A slide base 41 is centrally provided on the base 32 and the lower straight smaller diameter portion 34 is located on the slide base 41. By sliding the slide base 41 on the base 32, the lower straight smaller diameter portion 34 selectively assumes a pre-compression position where it is in contact with the intermediate tapered portion 38 immediately below the pushing press ram 39 and a compression position where the smaller diameter portion 34 is immediately below the main press ram 35.

The procedure for actually carrying out the compression and volume reduction with the apparatus will be explained hereinafter. First, the lower straight smaller diameter portion 34 constituting the compression sleeve is moved to the pre-compression position where it is in contact with the intermediate tapered portion 38 in the pre-compression device as shown in Fig. 5. Then, a cylindrical vessel 40 arranged in the straight larger diameter portion 42 and seated on the intermediate tapered portion 38 is forced into the lower straight smaller diameter portion 34 by means of the pushing press ram 39 driven by the hydraulic cylinder 37 while being compressed radially inwardly when passing through the intermediate tapered portion 38. After the pushing press ram 39 is then raised, the lower straight smaller diameter portion 34 including therein the cylindrical vessel 40 is brought into the compression position immediately below the main press ram 35 with the aid of the slide base 41. Thereafter, the main press ram 35 is lowered by the hydraulic cylinder 33 to further compress the cylindrical vessel 40 in the lower straight smaller diameter portion 34. After lifting means (not shown) in the main compression device is actuated to raise the lower straight smaller diameter portion 34 constituting the compression sleeve, the compressed block is moved out of the main compression device toward the pre-compression device by sliding the slide base 41, or after the slide base 41 is slid together with the lower straight small diameter portion including therein the compressed block into the pre-compression device, the lower straight smaller diameter portion 34 is raised and then the compressed block is pushed downward by the pushing press ram 39.

In compressing waste high efficiency particle air filters and reducing their volumes produced in nuclear power stations and the like which are different from the vessel filled with the solid wastes above described, these waste filters can be treated in the manner above described by replacing the intermediate tapered portion 38 with another die. After the treatment, compressed blocks can be stored in for example a steel drum having 200 l in capacity.

As can be seen from the description in detail, with the compression and volume reduction treatment apparatus for solid wastes according to the invention, the solid wastes together with the cylindrical vessel filled therewith are compressed and reduced in volume in three dimensional directions by the compression only in a single direction without jamming the cylindrical vessel. A plurality of compressed blocks can be stored in a vessel, for example, steel drum substantially the same in size as the above mentioned cylindrical vessel to enable vessels for wastes to be rationally handled, inasmuch as the compressed blocks of the waste are less in external size or outer diameter than cylindrical vessels.

Morevoer, the compressed blocks of solid wastes may be polygonal such as quadrilateral, hexagonal or the like to increase the storage efficiency of the wastes. Moreover, waste high efficiency particle air filters can be treated only by simply replacing part of the compression sleeve with a die. A plurality of compressed blocks can be stored in, for example, a steel drum of 200 l. As shown in the third embodiment, moreover, the overall height of the apparatus can be made lower by dividing the compression sleeve, so that the apparatus can be advantageously installed in a narrow room, particularly low room.

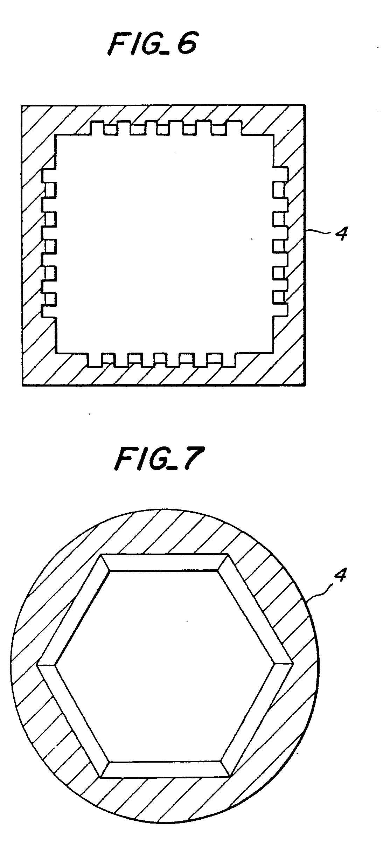

While the invention has been shown and described with reference to the preferred embodiments, it will be understood that various changes and modifications can be made therein. Although the compression sleeves have been shown in circular cross-section, this is only by way of example, and they may be in section polygonal such as quadrilateral shown in Fig. 6 or hexagonal shown in Fig. 7. In this case, compressed blocks of solid wastes can be formed in sizes less than polygons circumscribed to outer shapes of initial steel drums, thereby improving the storage efficiency of the compressed blocks.

## Claims

1. A compression and volume reduction treatment apparatus for solid wastes including a compression sleeve (4) for receiving therein a cylindrical vessel (20) filled with the solid wastes and a press ram (6) arranged above said compression sleeve (4) and movable upward and downward for compressing at high pressure the cylindrical vessel (20) in the compression sleeve (4), characterised in that the compression sleeve (4) comprises an upper straight portion (7a) with larger diameter than the cylindrical vessel (20) and having a straight cylindrical inner surface, in which the cylindrical vessel is a close fit, a lower straight portion (7c) having a smaller diameter than the cylindrical vessel (20) and having a straight cylindrical inner surface whose inner diameter is smaller than that of said upper straight larger diameter portion (7a), and an intermediate tapered portion (7b) whose inner surface is tapered downward to connect said straight cylindrical inner surfaces of said upper (7a) and lower (7c) portions, thereby compressing said cylindrical vessel (20) and reducing its volume in three dimensional directions by compressing said vessel (20) radially inwardly at the tapered inner surface of said intermediate tapered portion (7b) and compressing axially at said inner surface of said lower straight smaller diameter (7c) portion when the cylindrical vessel (20) in said upper straight larger diameter portion (7a) is urged by said press ram (6) in a uniaxial direction.

2. An apparatus as set forth in claim 1, wherein said press ram (6) is provided on its outer circumferential surface with a number of ridges (9) in its axial direction and said inner surfaces of said compression sleeve (4) are formed with a number of longitudinal grooves (8) engaging ridges of the press ram (6).

3. An apparatus as set forth in claim 2, wherein bottom of said longitudinal grooves (8) are rectilinearly continuous from an upper end to a lower end of said compression sleeve.

4. An apparatus as set forth in claim 1, 2 or 3 wherein said press ram is made as a duplicate press ram (27) comprising an outer press ram (27a) engageable in said lower straight smaller diameter portion (7c) of the compression sleeve

(4) and a pushing-in press ram (27b) provided in said outer press ram (27a) so as to be movable relatively to and in moving directions of the outer press ram (27a).

5. An apparatus as set forth in claim 1, 2, 3 or 4 wherein said lower straight smaller diameter portion (7c) is made by a different part detachable from said upper straight larger diameter portion (7a) and the intermediate tapered portion (7b) integral therewith, and said apparatus comprises a pre-compression device having a pushing press ram (39) for compressing the cylindrical vessel radially inwardly at the intermediate tapered portion into the lower straight smaller diameter portion (7c) and a main compression device (35) in which the radially inwardly compressed cylindrical vessel (40) is compressed axially in the lower straight smaller diameter portion (7c) transferred from the pre-compression device.

6. An apparatus as set forth in claim 5, wherein said pre-compression device is provided on a base (32) common to said main compression device (35), and a slide base (41) is provided on said base (32) enabling said lower straight smaller diameter portion (7c) to move between said pre-compression (37, 39) and main compression devices (33, 35).

7. An apparatus as set forth in any preceding claim, wherein shapes of said press ram and of an interior of said compression sleeve are any one of circular, quadrilateral and hexagonal shapes.

**Patentansprüche**

1. Vorrichtung zur Verdichtung und Volumenverminderung fester Abfälle, mit einer Verdichtungshülse (4) zur Aufnahme eines mit den festen Abfällen gefüllten zylindrischen Kessels (20) in ihrem Inneren, und mit einem Preßstempel (6), der über der Verdichtungshülse angeordnet und zur Hochdruckverdichtung des zylindrischen Kessels (20) in der Verdichtungshülse (4) auf- und abwärts bewegbar ist, dadurch gekennzeichnet, dass die Verdichtungshülse (4) mit einem oberen geraden Abschnitt (7a) versehen ist, der einen grösseren Durchmesser als der zylindrische Kessel (20) und eine gerade zylindrische Innenfläche hat, in den der zylindrische Kessel eng eingesetzt ist,

dass ein unterer gerader Abschnitt (7c) vorgesehen ist, der einen kleineren Durchmesser als der zylindrische Kessel (20) und der eine gerade zylindrische Innenfläche hat, deren Innendurchmesser kleiner ist als der des oberen geraden Abschnittes (7a) grösseren Durchmessers, und dass ein dazwischenliegender konischer Abschnitt (7b) vorgesehen ist, dessen Innenfläche zur Verbindung der geraden zylindrischen Innenfläche des oberen Abschnittes (7a) mit dem unteren Abschnitt (7c) nach unten verjüngt ist, wodurch der zylindrische Kessel (20) verdichtet und sein Volumen in drei Raumrichtungen durch Verdichtung des Kessels (20) radial nach innen an der konischen Innenfläche des dazwischenliegenden könischen Abschnittes (7b) und durch axiale Verdichtung an der Innenfläche des unteren geraden Abschnittes (7c) kleineren Durchmessers reduziert wird, wenn der zylindrische Kessel (20) im oberen geraden Abschnitt (7a) grösseren Durchmessers in einer gleichachsigen Richtung durch den Preßstempel (6) gedrückt wird.

2. Vorrichtung nach Anspruch 1, dadurch gekennzeichnet, dass der Preßstempel (6) an seiner äusseren Umfangsfläche mit einer Anzahl in seiner axialen Richtung verlaufenden Rippen (9) versehen ist, und dass die Innenflächen der Verdichtungshülse (4) mit einer Anzahl in Längsrichtung verlaufender Rillen (8) ausgebildet sind, in welche die Rippen des Preßstempels (6) eingreifen.

3. Vorrichtung nach Anspruch 2, dadurch gekennzeichnet, dass der Boden der Längsrillen (8) geradlinig kontinuierlich von einem oberen zu einem unteren Ende der Verdichtungshülse verläuft.

4. Vorrichtung nach Anspruch 1, 2 oder 3, dadurch gekennzeichnet, dass der Preßstempel als ein Doppelpreßstempel (27) ausgebildet ist, der einen in den unteren geraden Abschnitt (7c) der Verdichtungshülse (4) eingreifenden äusseren Preßstempel (27a) und einen Ausschiebe-Preßstempel (27b) aufweist, der in dem äusseren Preßstempel (27a) zur Bewegung relativ zur und in Bewegungsrichtung des äusseren Preßstempels (27a) vorgesehen ist.

5. Vorrichtung nach Anspruch 1, 2, 3 oder 4, dadurch gekennzeichnet, dass der untere gerade Abschnitt (7c) kleineren Durchmessers ein selbständiges Teil ist, das vom oberen geraden Abschnitt (7a) grösseren Durchmessers und dem mit diesem einstückig ausgebildeten dazwischenliegenden konischen Abschnitt (7b) entfernbar ist, und dass die Vorrichtung eine Vorverdichtungsvorrichtung mit einem Druckpreßstempel (39) zur radial nach innen gerichteten Verdichtung des zylindrischen Kessels an dem dazwischenliegenden konischen Abschnitt in den unteren geraden Abschnitt (7c) kleineren Durchmessers hinein und mit einer Hauptverdichtungsvorrichtung (35) ausgebildet ist, in welcher der radial nach innen verdichtete zylindrische Kessel (40) im unteren geraden Abschnitt (7c) kleineren Durchmessers übertragen von der Vorverdichtungsvorrichtung axial verdichtet wird.

6. Vorrichtung nach Anspruch 5, dadurch gekennzeichnet, dass die Vorverdichtungsvorrichtung an einer mit der Hauptverdichtungsvorrichtung (35) gemeinsamen Basis (32) vorgesehen ist, und dass an der Basis (32) eine Verschiebebasis (41) vorgesehen ist, durch die eine Bewegung des unteren geraden Abschnittes (7c) kleineren Durchmessers zwischen der Vorverdichtungsvorrichtung (37, 39) und der Hauptverdichtungsvorrichtung (33, 35) möglich ist.

7. Vorrichtung nach einem der vorhergehenden Ansprüche, dadurch gekennzeichnet, dass der Preßstempel und das Innere der Verdichtungshülse eine kreisförmige, viereckige oder rechteckige Form aufweisen.

## Revendications

1. Dispositif de compression et réduction de volume pour traiter des déchets solides, comprenant une chemise de compression (4) destinée à loger une cuve cylindrique (20) remplie de déchets solides, et un coulisseau (6) de presse disposé au-dessus de ladite chemise de compression (4) et mobile vers le haut et vers le bas pour comprimer sous une forte pression la cuve cylindrique (20) logée dans la chemise de compression (4), caractérisé en ce que la chemise de compression (4) comporte une partie supérieure droite (7a) d'un diamètre plus grand que celui de la cuve cylindrique (20) et ayant une surface intérieure cylindrique droite, dans laquelle la cuve cylindrique s'emboîte exactement, une partie inférieure droite (7c) d'un diamètre plus petit que celui de la cuve cylindrique (4c) et ayant une surface intérieure cylindrique droite dont le diamètre intérieur est plus petit que celui de ladite partie supérieure droite (7a) de grand diamètre, et une partie intermédiaire conique (7b) dont la surface intérieure se rétrécit vers le bas pour relier lesdites surfaces intérieures cylindriques droites desdites parties supérieure (7a) et inférieure (7c) en comprimant de ce fait ladite cuve cylindrique (20) et en réduisant son volume dans des directions tridimensionnelles en comprimant ladite cuve (20) radialement vers l'intérieur au niveau de la surface intérieure rétrécie de ladite partie intermédiaire conique (7b) et en comprimant axialement au niveau de ladite surface intérieure de ladite partie inférieure droite (7c) de petit diamètre quand la cuve cylindrique (20) logée dans ladite partie supérieure droite (7a) de grand diamètre est poussée dans un sens uniaxial par ledit coulisseau (6) de presse.

2. Dispositif selon la revendication 1, dans lequel ledit coulisseau de presse (6) est doté sur la surface périphérique extérieure d'un certain nombre de nervures (9) dans son sens axial, et lesdites surfaces intérieures de ladite chemise de compression (4) sont pourvues d'un certain nombre de gorges longitudinales (8) s'engageant sur les nervures du coulisseau de presse (6).

3. Dispositif selon la revendication 2, dans lequel le fond desdites gorges longitudinales (8) est continu d'une manière rectiligne depuis une extrémité supérieure jusqu'à une extrémité inférieure de ladite chemise de compression.

4. Dispositif selon la revendication 1, 2 ou 3, dans lequel ledit coulisseau de presse se présente comme un coulisseau (27) de presse en deux parties, comportant un coulisseau de presse extérieur (27a) pouvant s'engager dans ladite partie inférieure droite (7c) de petit diamètre de la chemise de compression (4) un coulisseau de presse pousseur (27b) présent dans ledit coulisseau de presse extérieur (27a) de façon à être mobile par rapport au coulisseau de presse extérieur (27a) et dans les sens de déplacement de ce dernier.

5. Dispositif selon la revendication 1, 2, 3 ou 4, dans lequel ladite partie inférieure droite (7c) de petit diamètre est constituée par une pièce différente séparable de ladite partie supérieure droite (7a) de grand diamètre et de la partie intermédiaire conique (7b) qui fait corps avec celle-ci, et ledit dispositif comporte un mécanisme de pré-compression ayant un coulisseau de presse pousseur (39) pour comprimer radialement la cuve cylindrique vers l'intérieur au niveau de la partie intermédiaire conique jusque dans la partie inférieure droite (7c) de petit diamètre, et un mécanisme principal de compression (35) dans lequel la cuve cylindrique (40) comprimée radialement vers l'intérieur est comprimée axialement dans la partie inférieure droite (7c) de petit diamètre transférée depuis le mécanisme de pré-compression.

6. Dispositif selon la revendication 5, dans lequel ledit mécanisme de pré-compression se trouve sur un socle (32) commun audit mécanisme principal de compression (35), et un socle coulissant (41) est présent sur ledit socle (32) en permettant à ladite partie inférieure droite (7c) de petit diamètre de se déplacer entre ledit mécanisme de pré-compression (37, 39) et ledit mécanisme principal de compression (33, 35).

7. Dispositif selon l'une quelconque des revendications précédentes, dans lequel la forme dudit coulisseau de presse et de l'intérieur de ladite chemise de compression est l'une quelconque des formes circulaire, quadrilatérale et hexagonale.

FIG. 1

5

2

10

10

9

6

20

7

7a

II II

7b

4

8

7c

3

1

FIG. 2

7a

7c

7b

7

8

4

1

## FIG.3

## FIG.4a  FIG.4b  FIG.4c

## FIG.4d  FIG.4e

# FIG.5

## FIG_6

## FIG_7